# EUROPEAN PATENT APPLICATION

(11) **EP 4 759 719 A1**
(43) Date of publication of application: **17.06.2026**
(21) Application number: 24383374.6
(22) Date of filing: 16.12.2024
(51) Int. Cl.: B64D 37/30, B64D 37/32, B64D 37/34, H05B 3/42, H05B 6/36

(54) **FUEL CONDITIONING SYSTEM**

(71) Applicant: Airbus Operations, S.L.U., 28906 Getafe (Madrid) (ES)
(72) Inventor: BERROCOSO REDONDO, Jorge, 28906 Getafe, Madrid (ES); CASADO MONTERO, Carlos, 28906 Getafe, Madrid (ES); GÓMEZ FERNÁNDEZ, Agustín, 28906 Getafe, Madrid (ES); LASA ARMENTIA, Aratz, 28906 Getafe, Madrid (ES); MARTINO GONZÁLEZ, Esteban, 28906 Getafe, Madrid (ES)
(74) Representative: ABG Intellectual Property Law, S.L.

(57) **Abstract**

This invention relates to a heat transfer device (1) for an aircraft (100), in particular for providing heat to the fuel of a fuel conduct (4). The present invention also related to a conditioning system comprising a heat transfer device (1) thereof, an aircraft (100) comprising a heat transfer device (1) of a fuel conditioning system thereof and a method for conditioning fuel of an aircraft (100).

## Description

### TECHNICAL FIELD OF THE INVENTION

This invention relates to a heat transfer device for an aircraft, in particular for providing heat to the fuel of a fuel conduct. The present invention also related to a conditioning system comprising a heat transfer device thereof, an aircraft comprising a heat transfer device of a fuel conditioning system thereof and a method for conditioning fuel of an aircraft.

### BACKGROUND OF THE INVENTION

The ongoing global push towards decarbonisation is a significant driving force in the evolution of the aircraft industry. As the sector seeks to reduce its carbon footprint, hydrogen has emerged as a particularly promising alternative fuel. Unlike conventional fossil fuels, hydrogen, when used in combustion, almost only produces water vapour, it creates a very minimal NOX fraction, making it an attractive option for minimizing gas emissions. This transition to hydrogen as a primary fuel source introduces new technological challenges, particularly in the design and operation of aircraft systems such as Auxiliary Power Units (APUs).

In aircraft applications, hydrogen is generally stored in its liquid cryogenic form (LH2). This form is preferred because of hydrogen's high energy density and the ability to store it at extremely low temperatures, which are essential for maintaining the liquid state. However, before hydrogen can be utilized in the combustion process within APUs, it must undergo a phase change from its liquid state (LH2) to a gaseous state (GH2) at ambient temperature. This conditioning process is not only crucial but also technically demanding, given the need to manage extreme temperature differentials while ensuring efficient and safe heat transfer.

The conversion of hydrogen from liquid to gas phase, and its temperature conditioning, involves a complex system of thermal management that operates under varying conditions, whether during steady-state operation or during the initial start-up phase of the APU. These systems are engineered to include multiple components such as heat exchangers, evaporators, valves, and recirculation circuits, all working in unison to ensure that the hydrogen is conditioned correctly, safely and delivered at the appropriate temperature and pressure for combustion.

During steady-state operation, the process allows for the utilization of a consistent external heat source within the aircraft to facilitate the conditioning of hydrogen. For example, a gas turbine or an engine such as an APU, which exhaust system releases high-energy combustion gases, can serve as a primary heat source. In this scenario, the hot exhaust gases exchange thermal energy with a secondary fluid, which then transfers this heat to the liquid hydrogen, enabling the fuel to transition into its gaseous state.

Several existing technologies and patent applications have addressed the specific challenges associated with the conditioning of liquid hydrogen to gaseous hydrogen having different approaches which ensures efficient heat transfer and the effective conditioning of hydrogen for automotive applications, highlighting the versatility of such technologies across different transportation sectors. Other technologies are specifically designed for aircraft applications allowing efficient heat exchange while maintaining the operational integrity of the system, even under extreme conditions.

In addition to these specific technologies, other heat exchanger designs are commonly employed in cryogenic applications, each offering distinct advantages. Shell and Tube Heat Exchangers are widely used for gas-to-liquid and gas-to-gas heat transfer, particularly in high-temperature and high-pressure environments. These exchangers are particularly effective when fouling is a concern or when other types of heat exchangers would be unsuitable due to operational conditions. Plate-Type Heat Exchangers, such as plate-and-frame, microchannel, and extended surface/plate fin exchangers, also play a critical role in cryogenic applications. Plate-and-frame exchangers, for example, are valued for their high heat transfer coefficients and compact design, making them suitable for environments where space is limited. Microchannel or printed circuit heat exchangers (PCHEs) consist of stacked plates with photo-chemically machined grooves to form the flow path, providing safe operation at pressures up to 600 bar.

However, their operating temperature range (73 K to 1073 K) may limit their application in hydrogen vaporization processes. Extended surface or plate fin exchangers increase the heat transfer surface density through the addition of fins, improving the efficiency of heat exchange. This technology is exemplified by the brazed aluminium plate-fin heat exchangers (BAHXs) used in cryogenic applications, known for their high thermal conductivity and strength at low temperatures.

One of the most challenging operational scenarios for hydrogen conditioning systems arises during emergency situations, where the APU must start quickly to provide critical electrical and/or pneumatic power to the aircraft. In such scenarios, the hydrogen conditioning system, which is often at cryogenic temperatures when the APU is inactive, must rapidly warm up the hydrogen to ensure a quick APU start.

Therefore, there is a need in the art for a device or system based on electric supply that is able to provide an evaporation of liquid hydrogen and provide heating into gas hydrogen quickly and efficiently enough so that it can be implemented in APUs during emergency situations.

### SUMMARY OF THE INVENTION

The present invention provides a heat transfer device according to claim 1, a fuel conditioning system according to claim 11, an aircraft according to claim 13 and a method for conditioning fuel of an aircraft according to claim 14. Dependent claims disclose particular embodiments of the present invention.

*In a first inventive aspect, the present invention provides a heat transfer device for an aircraft having a first inlet and* a *first outlet, the heat transfer device comprising:*
- *a fuel conduct having a first end and a second end, the first end being connected in fluidic communication to the first inlet of the heat transfer device and the second end being connected in fluidic communication to the first outlet of the heat transfer device;*
- *a temperature sensor located at the second end of the fluid conduct and configured for monitoring the temperature of the fuel within the fuel conduct; and*
- a heat exchanger for providing heat to the fuel of the fuel conduct,
wherein
- *the heat exchanger integrates,*
   ∘ a *heat source comprising a working fluid, the heat source being connected in fluidic communication to the heat exchanger and being configured to provide heat to the heat exchanger; and*
   ∘ *heating means connected to a power supply, the power supply being configured for providing power to the heating means;*
*wherein*
*the heat exchanger further comprises heating means connected to a power supply, the power supply being configured for providing power to the heating means;*
*the heat exchanger is configured for:*
   *in a first operating mode, providing heat from the heat source to the fuel of the fuel conduct,*
   *in a second operating mode, providing heat from the heating means to the fuel of the fuel conduct, and*
   *in a third operating mode, providing heat from the heat source and from the heating means, to the fuel of the fuel conduct;*
   *and*
*the temperature sensor is further connected to the power supply and is further configured for actuating the power supply by means of control and processing means if the temperature of the fuel within the fuel conduct is lower than a predetermined target temperature.*

The present invention provides a heat transfer device for an aircraft which helps heating the fuel of a fuel conduct up to a predetermined target temperature which is the optimal temperature for its further injection into an engine and combustion. In some embodiments, the heated fuel is to be consumed by an engine of an Auxiliary Power Unit.

The heat transfer device advantageously integrates in the heat exchanger the heat source and the heating means, i.e. into one single element.

Advantageously, the present invention permits to provide heat to the fuel of the fuel conduct in three possible states of operation. In particular, in case of emergency, the device of the invention is a quicker and more efficient solution for providing a higher quantity of heat to the fuel of the fuel conduct which results in the heating of the fuel up to its predetermined target temperature in a shorter time period with respect to the solutions known in the state of the art.

Emergency situations are those in in-flight operation such as a start-up or in case of overloads, where the APU must start quickly to provide critical electrical and/or pneumatic power to the aircraft.

In the first inventive aspect, the heat transfer device of the invention comprises a fuel conduct, a heat exchanger integrating a heat source and heating means for heating the fuel of the fuel conduct, and a temperature sensor.

The fuel conduct comprises a first end and a second end. The first end is connected in fluidic communication to the first inlet of the heat transfer device and the second end is connected in fluidic communication to the first outlet of the heat transfer device so that the fuel is carried from the first end to the second of the fuel conduct. Furthermore, the device of the invention ensures that the temperature of the fuel of the fuel conduct at the first outlet of the heat transfer device is higher than the temperature of the fuel of the fuel conduct at the first inlet of the heat transfer device. In an embodiment, the heat transfer device also ensures that the fuel of the fuel conduct changes phase when it is carried from the first inlet to the first outlet of the heat transfer device. In a particular embodiment, the fuel of the fuel conduct turns from liquid phase, at the first inlet of the heat transfer device, to gas phase, at the first outlet of the heat transfer device.

The temperature sensor is located at the second end of the fluid conduct and is configured for monitoring the temperature of the fuel within the fuel conduct so that the sensor provides a precise measurement of the temperature of the fuel of the fuel conduct downstream the heat exchanger. The temperature sensor is preferably positioned in the heat transfer device, downstream the heat exchanger. In an alternative embodiment, the temperature sensor is positioned out of the heat transfer device, downstream the heat exchanger.

The heat source is connected in fluidic communication to the heat exchanger, and it comprises a working fluid which is previously heated thanks to the heat source. Said heated working fluid is carried towards the heat exchanger by means of a closed loop between the heat source and the heat exchanger. Then, when the heated working fluid is carried from the heat source to the heat exchanger, said heat exchanger is able to provide heat from the heated working fluid to the fuel of the fuel conduct.

In an embodiment, the working fluid is Nitrogen (N2), Helium (He), or a mixture of Nitrogen (N2) and Helium (He), carbon dioxide, Hydrogen (H) and/or ethylene glycol water (EGW).

Furthermore, the power supply connected to the heating means is configured for providing power to the heating means. In the particular case of the present invention, advantageously the heat exchanger integrates the heat source and the heating means in one single element in order to enhance the control over the heat quantity transferred to the fuel of the fuel conduct.

In a first operating mode, the heat exchanger is able to provide heat only from the heat source to the fuel of the fuel conduct via the previously heated working fluid.

In a second operating mode, the heat exchanger is able to provide heat to the fuel of the fuel conduct, only from the heating means connected to the power supply.

In a third operating mode, the heat exchanger is able to provide heat from both, the heat source and from the heating means, to the fuel of the fuel conduct.

In an embodiment, the first operating mode corresponds to steady state operation wherein the heat exchanger only requires a constant and efficient heat quantity which is provided by the heat source only.

In an embodiment, the second operating mode corresponds to an state of operation wherein the heat exchanger only requires a quantity of heat, which is provided by the heating means only. This operating mode corresponds to two possible scenarios, one corresponding start-up only with heat transfer from the heating means, i.e. heating electrical means only, and another one corresponding to replacement of the heat source in case of failure of the latter. In this embodiment the heat from the working fluid of the heat source may be zero in certain phases due to failure during steady state or by design in the start-up phase.

In an embodiment, the third operating mode corresponds to an emergency operation which requires the heat exchanger to provide a higher quantity of heat, which is a combination of the heat from the heat source and the additional heat from the heating means. This emergency operation mode works with high efficiency in order to heat the fuel of the fuel conduct in a shorter period of time.

The temperature sensor of the heat transfer device of the invention is connected to the power supply and is further configured for actuating the power supply by means of control and processing means if the temperature of the fuel within the fuel conduct is lower than a predetermined target temperature. In an embodiment, when reaching the predetermined target temperature at the first outlet, the fuel of the fuel conduct has changed phase with respect to its state when entering the first inlet of the heat transfer device.

The control and processing means are both connected to the temperature sensor and to the power supply in order to actuate the power supply as quickly as possible for providing power to the heating means in case of emergency, i.e. in case the a target temperature is not achieved, in case of overloads or extreme conditions. When the control and processing means actuates the power supply so that the heating means are able to deliver a higher quantity of additional heat to the heat exchanger, thus the fuel of the fuel conduct reaches the predetermined target temperature in a shorter period of time.

Advantageously, the heat transfer device also helps reduce weight and the corresponding occupied volume within the aircraft which are two key factors in this field of technique. Said effect is mostly provided by the integration in the heat exchanger of both, the heat source and the heating means into one single element.

*In an embodiment, the heating means are induction heating means.*

Advantageously, the induction heating means helps producing heat in a direct manner with respect to the fuel conduct instead of relying on indirect radiation, convection, or thermal conduction. Induction heating means allow high transmission of heat in a quicker manner so that the temperature increase is performed in a short period of time. Specifically, the electrical power is transmitted from the power supply to the heat exchanger body by induced currents (eddy currents or Foucault currents) and from the heat exchanger body by conduction to the interface surface or exchange surface of the fuel conduct and by convection to the fuel.

Also advantageously, the changes in heat setting of the induction heating means are instantaneous and said feature helps the overall heat transfer device to be reactive in case of emergency.

In an embodiment, the induction heating means are induction coil wound around the heat exchanger.

In an embodiment, the induction heating means are induction cartridges inserted within the heat exchanger.

*In an embodiment of the heat transfer device,*
*the induction heating means is an induction coil wound around the heat exchanger, and*
*further comprises a plurality of ferromagnetic means inserted in corresponding slots provided in the heat exchanger.*

This embodiment is intended for situations where the material of the heat exchanger is not ferromagnetically effective or compatible. This is the case when the fuel is hydrogen since the compatible steel of the heat exchanger is not ferromagnetic. Advantageously, the ferromagnetic means allow induced current transmission to the heat exchanger body, while if the heat exchanger body were ferromagnetic, they would not be needed. Thus, for instance, if the heat exchanger body were aluminium it would be also necessary.

In those embodiments where the heating means are induction heating means, the ferromagnetic means are distributed within the heat exchanger in order to increase the efficiency of the induction phenomenon and to uniformise and/or direct the heat so as not to generate stresses, deformation or thermal fatigue phenomena that would jeopardise the structural and safety integration of the heat exchanger.

In an embodiment, the working fluid conduct and/or the heat exchanger comprises a ferrous metal such as cast iron or stainless steel.

In an embodiment, the working fluid conduct and/or the heat exchanger are made of a ferrous metal such as cast iron or stainless steel.

*In an embodiment, the induction heating means are a plurality of induction cartridges inserted within the heat exchanger in corresponding slots.*

Advantageously this embodiment provides high modularity for component replacement and inspection, maintainability and repairability. In the event of any type of failure, it is sufficient to replace the damaged induction cartridges

*In a further embodiment each of the plurality of induction cartridges comprises*
*a ferromagnetic external casing with an induction coil housed inside said ferromagnetic external casing, and*
*a lid serving for handling the induction cartridge and to be* a *stop for placing the induction cartridge in the corresponding slot.*

This embodiment, in addition to the high modularity for component replacement and inspection, maintainability and repairability, provides an easy handling of the induction cartridge at the moment of inserting or removing them in or from the slots.

Preferably there is a separating distance between the induction coil itself and the ferromagnetic external casing, so that the inductions coil is not in contact with the ferromagnetic external casing.

Further, the lid contains the connectors that can electrically feed the induction coils.

*In an embodiment, the heating means are resistance heating means.*

Advantageously, the resistance heating means helps providing fast response and compactness to the overall heat transfer device. Furthermore, due to the variety of dimensions of the resistance heating means, the integration of said resistance heating means within the heat exchanger is facilitated.

*In a particular embodiment the resistance heating means is a plurality of resistance cartridges inserted within the heat exchanger in corresponding slots.*

Advantageously this embodiment provides high modularity for component replacement and inspection, maintainability and repairability. In the event of any type of failure, it is sufficient to replace the damaged resistance cartridges.

*In a further embodiment, each of the plurality of resistance cartridges comprises,*
*a resistance, and*
*a lid for handling the resistance cartridge and to be a stop for placing the resistance cartridge in the corresponding slot.*

This embodiment, in addition to the high modularity for component replacement and inspection, maintainability and repairability, provides an easy handling of the resistance cartridge at the moment of inserting or removing them in or from the slots.

*In an embodiment, the heat exchanger further comprises isolation means configured for confining heat into the heat exchanger.*

Advantageously, the isolation means helps improving heating phenomenon provided by the heating means confining and retaining the heat into the heat exchanger, more particularly when the heating means are induction heating means.

In an embodiment, the isolation means are conventional thermal insulation which permits to confine and concentrate the heat provided by the heating means within the heat exchanger and avoid formation of high temperature spots in the external surface of the heat exchanger. Advantageously, including thermal isolation means helps reducing fire hazard since hot spots formation are ignition source in case of fuel leak, more particularly when the fuel is hydrogen.

In an embodiment, where the heating means are induction heating means, the isolation means are magnetic flux control means which help increasing the effectiveness of the induction and consequently reducing the required sizing of the induction heating means.

In an embodiment, where the heating means are induction heating means and the induction heating means are induction coil wound around the heat exchanger, the isolation means are located on the external sides of the induction coil in order to concentrate the magnetic field into the heat exchanger.

In an embodiment, where the heating means are induction heating means and the induction heating means are induction cartridges inserted within the heat exchanger, the isolation means are located on the external sides of the heat exchanger.

In an embodiment, the flow of the fuel of the fuel conduct and the flow of the working fluid of the heat source are in counterflow.

The flow of the fuel of the fuel conduct and the flow of the working fluid are in counterflow so that the most heat is supplied by the working fluid close to the outlet of the heat exchanger which is where the fuel of the fuel conduct requires the most heat in order to reach the predetermined target temperature. While the temperature of the working fluid is decreasing, since the working fluid continuously transfers heat to the fuel of the fuel conduct, the fuel temperature gradually increases, facilitating the phase change and performing such phase change in a less abrupt manner. The working fluid remains in contact with the fuel conduct until the inlet of the heat exchanger, where the temperature of the fuel of the fuel conduct is the coldest; also the temperature of the working fluid is lower at the point of contact with fuel at the inlet of the heat exchanger than it is when it is in contact with the fuel at the outlet of the heat exchanger.

Advantageously, arranging the flow of the fuel of the fuel conduct and the flow of the working fluid in counterflow provides optimized heat transfer between the working fluid and the fuel of the fuel conduct.

*In an embodiment, the heat transfer device of the first inventive aspect further comprises a second inlet and* a *second outlet wherein the second inlet is configured for introducing an inert gas and the second outlet is configured for conducting the inert gas to the outside of the heat transfer device and to conduct together with the inert gas any leakage, such* as *fuel, that may occur.*

Advantageously, introducing an inert gas within the heat transfer device helps introducing a flow for ventilating the internal volume of the heat transfer device which removes any eventual fuel located within the device due to leakages. Also, it helps maintaining the temperature within the heat transfer device to specific conditions where the temperature is lower than the temperature of the fuel at the outlet of the heat transfer device. Thus, hot spots inside the heat transfer device, which are sources of ignition, are avoided, and the integrity of the elements inside the heat transfer device is ensured.

The inert gas is introduced through the second inlet and outputted off the heat transfer device through the second outlet.

*In an embodiment, the inert gas is enriched Nitrogen or enriched Helium.*

In the context of the present disclosure, enriched Nitrogen or enriched Helium is understood as a gas or gas mixture with a majority content >50% in Nitrogen or Helium.

Advantageously the enriched Nitrogen or enriched Helium increases the effect of ventilating the internal volume of the heat transfer device removing any eventual fuel located within the device due to leakages.

*In an embodiment of the heat transfer device of the first inventive aspect of the invention:*
- *the heat exchanger and the heating means are encapsulated, or*
- *the heat exchanger, the heating means and the heat source are encapsulated, or*
- *the heat exchanger, the heating means and the power supply are encapsulated, or*
- *the heat exchanger, the heating means, the heat source and the power supply are encapsulated, or*
- *the heat exchanger (8), the heating means (9), the heat source (6), the control and processing means (10) and the power supply (5) are encapsulated.*

In the context of the present disclosure, encapsulation is understood as that some elements of the heat transfer device are placed within a protective casing. This encapsulation protects the elements from physical damage and environmental factors, and ensures the element's durability and reliability during its life cycle and also during operative conditions.

Encapsulation is produced by means of the second inlet and the second outlet through with the inert gas is introduced. Said encapsulation helps enhancing security, for example regarding eventual leakage of any element of the heat transfer device located within the encapsulated area.

Advantageously, encapsulating some elements of the heat transfer device secures the rest of the aircraft elements from, for example, fire hazard.

*In an embodiment, the fluid of the fluid conduct is hydrogen (H2).* That is, the fluid of the fluid conduct is pure hydrogen.

In an embodiment, the fluid of the fluid conduct comprises hydrogen.

In an embodiment, the fluid of the fluid conduct is a mixture of hydrogen and fuel such as methane, propane, butane etc. In the particular case of the fluid of the fluid conduct being a mixture, hydrogen is the majority of the mixture.

Specifically, at ambient pressure, that is around 101325 Pa, the heat transfer device requires that the heat source supplies a power of around 1 kW per 1 kg/h of fuel, in particular hydrogen, in order to evaporate said fuel thanks to the heating phenomenon provided by the heat exchanger of the heat transfer device. In the particular case of hydrogen, the fuel temperature is raised up to ambient temperature that is around 15°C.

In an embodiment, the heat transfer device further comprises testing means configured for monitoring and checking the functional status of each of its elements.

*In a second inventive aspect, the present invention provides a fuel conditioning system comprising a heat transfer device according to any embodiment of the first inventive aspect of the invention.*

In an embodiment of the second inventive aspect, the heat source is connected in fluidic communication to a recovery circuit configured for providing external heat to the working fluid of the heat source.

In an embodiment, the recovery circuit provides external heat recovered from the aircraft or from the exhausted gas.

*In a third inventive aspect, the present invention provides an aircraft comprising a heat transfer device according to any embodiment of the first inventive aspect or a fuel conditioning system according to any embodiment of the second inventive aspect.*

In a fourth inventive aspect, the present invention provides a method for conditioning fuel of an aircraft, the method comprising the following steps:
a) providing a heat transfer device according to any embodiment of the first inventive aspect or a conditioning system according to any embodiment of the second inventive aspect,
b) providing heat from the heat source or the heating means to the heat exchanger,
c) providing heat from the heat exchanger to the fuel of the fuel conduct,
d) monitoring the temperature of the fuel within the fuel conduct at the second end of the fluid conduct by means of the temperature sensor, and
e) actuating the power supply by means of the control and processing means, actuating the heat source, or actuating both, the power supply and the heat source, if the temperature of the fuel within the fuel conduct is lower than a predetermined target temperature.

In an embodiment, the heat transfer device is able to function only with one source of heat to the heat exchanger, that is to say, without providing heat from the other source of heat, if the temperature of the fuel is monitored and is above the predetermined target temperature.

In an embodiment, steps d) and e) operates as a control loop which repeats as many times as necessary until the temperature of the fuel of the fuel conduct is at least equal to the predetermined temperature. Advantageously, said control loop helps increasing precision of the temperature of the fuel and ensures that the optimal conditions for the fuel are reached.

In an embodiment of the fourth inventive aspect of the invention, the controlling means are configured for actuating the power supply to provide heat to the fuel of the fuel conduct (4) within a range of 30 to 70 milliseconds, preferably in around 50 milliseconds.

Advantageously, the controlling means ensures, thanks to its short time response, that the additional heat is rapidly provided to the heat exchanger, and thus to the fuel of the fuel conduct, in case of emergency.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1-5: These figures show different embodiments of the heat transfer device according to the present invention.
- Figures 6-8: These figures show a heat exchanger according to an embodiment of the heat transfer device of the present invention with induction heating means.
- Figures 9A-9B: These figures show a heat exchanger according to the same embodiment of the heat transfer device in a perspective view with details of some ferromagnetic means.
- Figure 10: This figure shows a perspective cross-section view of the heat exchanger showing the induction cartridge with ferromagnetic external casing also in cross-section and the induction coil inside the ferromagnetic external casing.
- Figure 11: This figure shows the same details of the induction cartridges of figure 10.
- Figure 12: This figure shows a perspective view of the embodiment with induction cartridges before insertion in the corresponding slots.
- Figures 13A-13B: This figure shows details of the induction cartridges with ventilation means.
- Figure 14: This figure shows a bottom view of the heat exchanger with a bottom cover.
- Figure 15: This figure shows a perspective cross-section view of an embodiment of heat exchanger showing a resistance cartridge and the resistance.
- Figure 16: This figure shows a perspective view of the embodiment with resistance cartridges before insertion in the corresponding slots.
- Figure 17: This figure shows a bottom view of the heat exchanger of the same embodiment with a bottom cover.
- Figure 18: This figure shows a horizontal cross-section view of an embodiment of the heat exchanger with a plurality of resistances.
- Figure 19: This figure shows a perspective cross-section view of the heat exchanger of figure 18 showing details of the plurality of resistances inserted in the heat exchanger.
- Figure 20: This figure depicts the same perspective cross-section view of the heat exchanger of figure 18 without the resistances and showing the plurality of housings of the heat exchanger.
- Figure 21: This figure shows a detailed view of the area in the bottom side for the bottom cover of the same embodiment.
- Figure 22: This figure shows an aircraft comprising a heat transfer device according to an embodiment of the present invention.

### DETAILED DESCRIPTION OF THE INVENTION

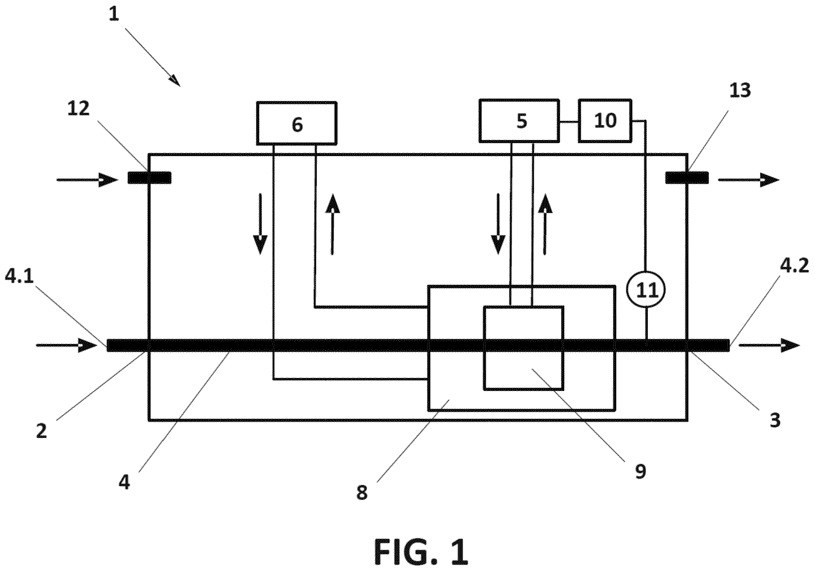

Figures 1 to 5 depict embodiments of the heat transfer device (1) for an aircraft (100) according to the invention.

In these embodiments, from figure 1 to 5, the heat transfer device (1) has a first inlet (2) and a first outlet (3). The heat transfer device (1) also comprises a fuel conduct (4) having a first end (4.1) and a second end (4.2). The first end (4.1) is connected in fluidic communication to the first inlet (2) of the heat transfer device (1) and the second end (4.2) is connected in fluidic communication to the first outlet (3) of the heat transfer device (1).

The heat transfer device (1) of figures 1 to 5 also comprises a temperature sensor (11) located at the second end (4.2) of the fluid conduct (4). The temperature sensor helps monitoring the temperature of the fuel within the fuel conduct (4). In an embodiment the temperature sensor is positioned in the heat transfer device (1), downstream the heat exchanger. In an alternative embodiment, the temperature sensor is positioned out of the heat transfer device, downstream the heat exchanger.

Also, the heat transfer device (1) comprises a heat exchanger (8) which integrates as a single element, a heat source (6) comprising a working fluid and heating means (9) which are connected to a power supply (5).

The heat source (6) is connected in fluidic communication to the heat exchanger (8) and said heat source (6) is configured to provide heat to the heat exchanger (8). The arrows depicted in figures 1 to 5 represent the direction of the flow of each fluid. In addition, the power supply (5) connected to the heating means (9) is configured for providing power to said heating means (9).

Also, the heat exchanger (8) is configured for working in three different operating modes. In a first operating mode, the heat exchanger (1) provides heat from the heat source (6) to the fuel of the fuel conduct (4). In a second operating mode, the heat exchanger (8) provides heat from the heating means (9) to the fuel of the fuel conduct (4). Finally, in a third operating mode, the heat exchanger (8) provides heat to the fuel of the fuel conduct (4) from both sources of heat, the heat source (6) and the heating means (9).

Furthermore, the temperature sensor (11) is connected to the power supply (5) and is further configured for actuating the power supply (5) by means of control and processing means (10) if the temperature of the fuel within the fuel conduct (4) is lower than a predetermined target temperature.

Thanks to the heat transfer device (1), the conditions of the fuel of the fuel conduct (4) at the first outlet (4.2) is continuously monitored and said heat transfer device (1) ensures that the fuel is outputted off the heat transfer device (1) at an optimal temperature which is at least equal to the predetermined target temperature, or above.

In an embodiment, the first operating mode is a steady state operation wherein the heat exchanger (8) only requires a constant and efficient heat quantity which is provided by the heat source (8) only.

In an embodiment, the second operating mode is state of operation wherein the heat exchanger (8) only requires a quantity of heat which is provided by the heat source (8) only.

In an embodiment, the third operating mode is an emergency operation which requires the heat exchanger (8) to provide a higher quantity of heat, which is a combination of the heat from the heat source (6) and the additional heat from the heating means (9). This emergency operation mode works with high efficiency in order to heat the fuel of the fuel conduct (4) in a shorter period of time.

In an embodiment, when reaching the predetermined target temperature at the first outlet (3), the fuel of the fuel conduct (4) has changed phase with respect to its state when entering the first inlet (2) of the heat transfer device (1).

The control and processing means (10) are both connected to the temperature sensor (11) and to the power supply (5) in order to actuate the power supply (5) as quickly as possible on the heating means (9) in case of emergency, such as in case the target temperature is not achieved for example in case of overloads or extreme conditions. When the control and processing means (10) actuates the power supply (5) so that the heating means (9) are able to deliver a higher quantity of additional heat to the heat exchanger (8), thus the fuel of the fuel conduct (4) reaches the predetermined target temperature in a shorter period of time.

Advantageously, the heat transfer device (1) also helps reduce weight and occupied volume within the aircraft (100). Said effect is mostly provided by the integration in the heat exchanger (8) of both, the heat source and the heating means (9) into one single element.

In an embodiment, the flow of the fuel of the fuel conduct (4) and the flow of the working fluid of the heat source (6) are in counterflow.

In an embodiment, the fluid of the fluid conduct (4) is hydrogen (H₂).

In some embodiments of the invention, as the ones shown in figure 1 to 5, the heat transfer device (1) comprises a second inlet (12) and a second outlet (13) wherein the second inlet (12) is configured for introducing an inert gas and the second outlet (13) is configured for conducting the inert gas to the outside of the heat transfer device (1) and to conduct together with the inert gas any leakage, such as fuel, that may occur.

In an embodiment, the inert gas is enriched Nitrogen.

In an embodiment, as the one shown in figure 1, the heat exchanger (8) and the heating means (9) are encapsulated.

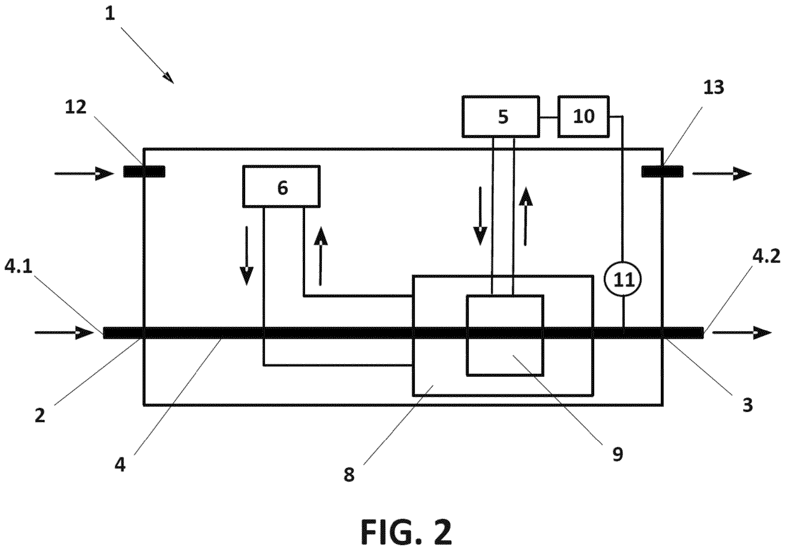

In an embodiment, as the one shown in figure 2, the heat exchanger (8), the heating means (9) and the heat source (6) are encapsulated.

In an embodiment, not shown in the figures, the heat exchanger (8), the heating means (9) and the power supply (5) are encapsulated

In an embodiment, not shown in the figures, the heat exchanger (8), the heating means (9), the heat source (6) and the power supply (5) are encapsulated.

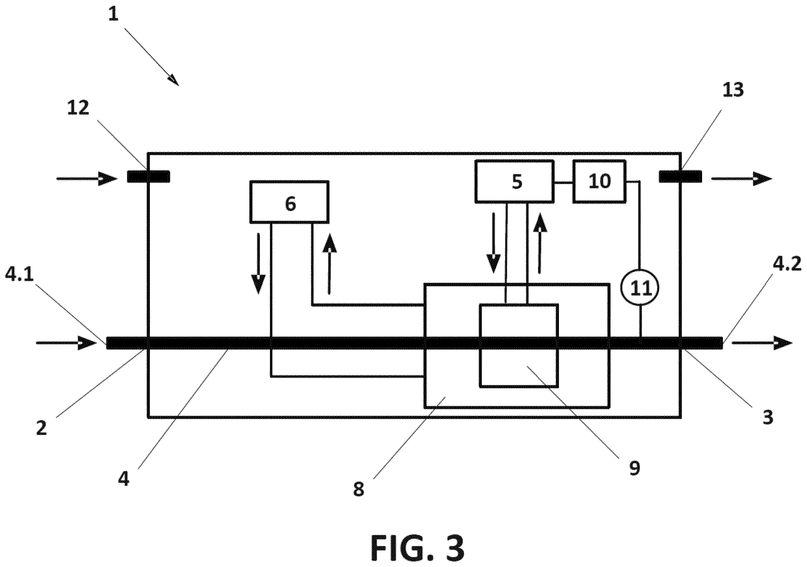

In an embodiment, as the one shown in figure 3, the heat exchanger (8), the heating means (9), the heat source (6), the control and processing means (10) and the power supply (5) are encapsulated.

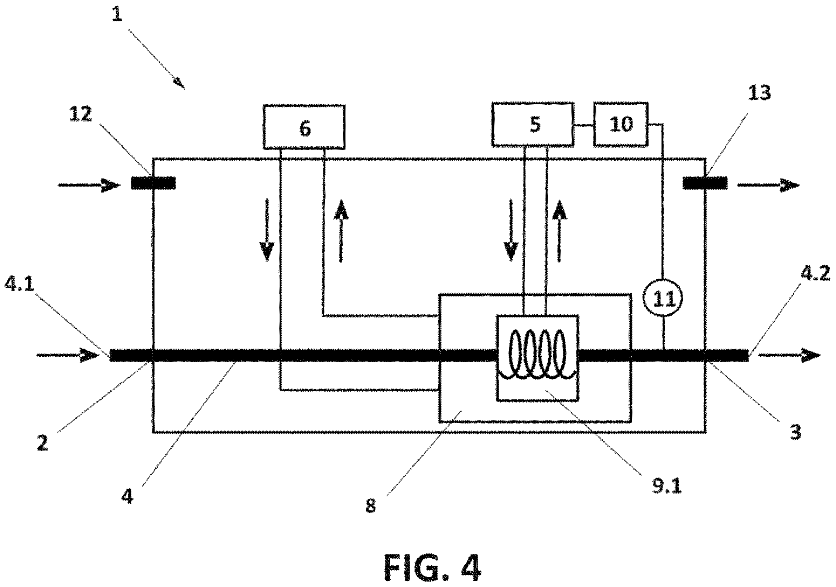

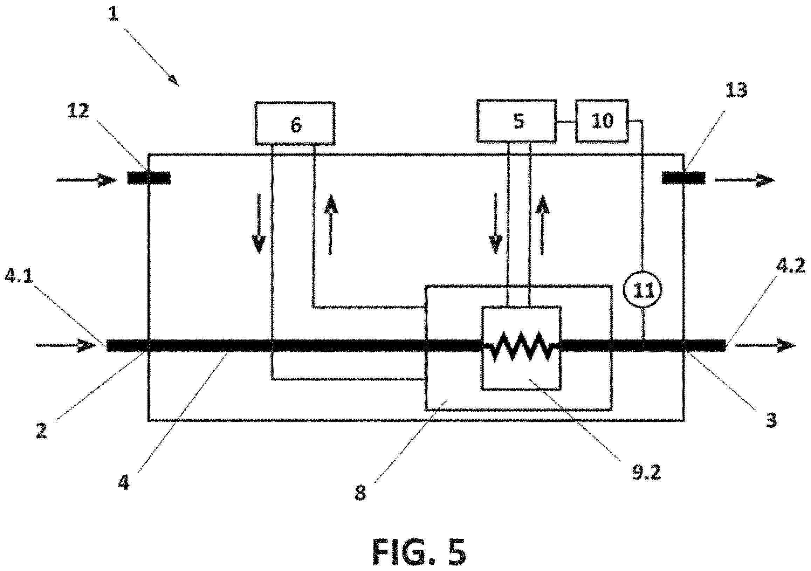

In a particular embodiment of figure 4 or figure 5, not shown, the heat exchanger (8) and the induction heating means (9.1) or the resistance heating means (9.2) are encapsulated.

In a particular embodiment of figure 4 or figure 5, not shown, the heat exchanger (8), the induction heating means (9.1) or the resistance heating means (9.2), and the heat source (6) are encapsulated.

In a particular embodiment of figure 4 or figure 5, not shown, the heat exchanger (8), the induction heating means (9.1) or the resistance heating means (9.2), and the power supply (5) are encapsulated

In an embodiment, the heat exchanger (8), the induction heating means (9.1) or the resistance heating means (9.2), the heat source (6) and the power supply (5) are encapsulated.

In an embodiment, as the one shown in figure 3, the heat exchanger (8), the induction heating means (9.1) or the resistance heating means (9.2), the heat source (6), the control and processing means (10) and the power supply (5) are encapsulated.

### Induction heating means (9.1) as heating means (9) of the heat exchanger (8)

In an embodiment, as shown in figure 4, the heating means (9) are induction heating means (9.1).

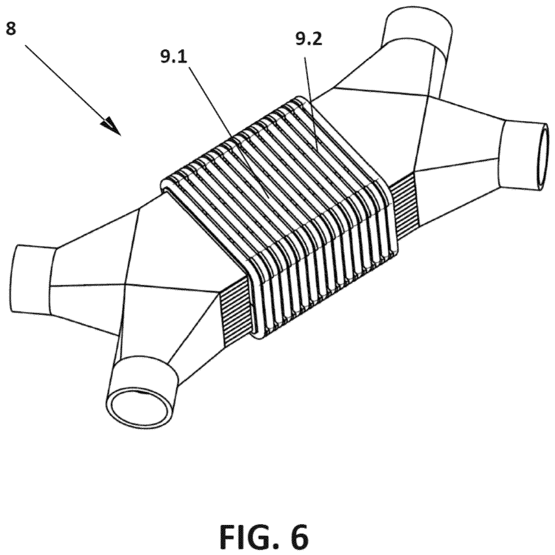

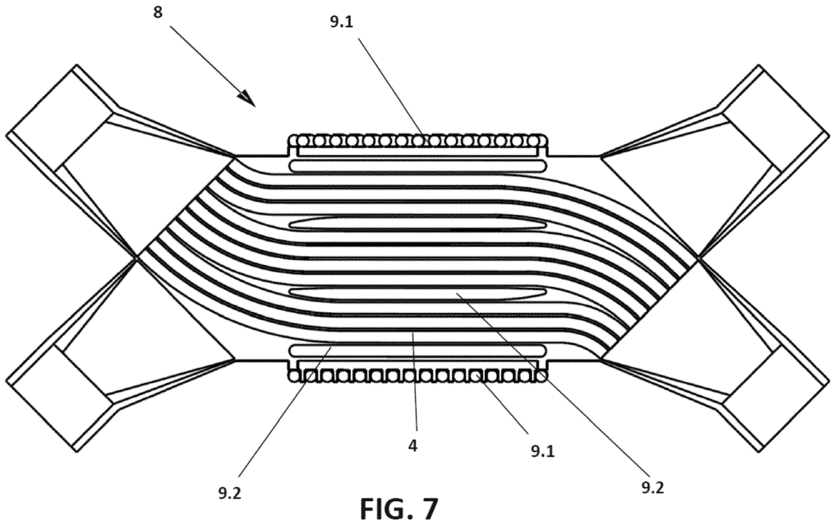

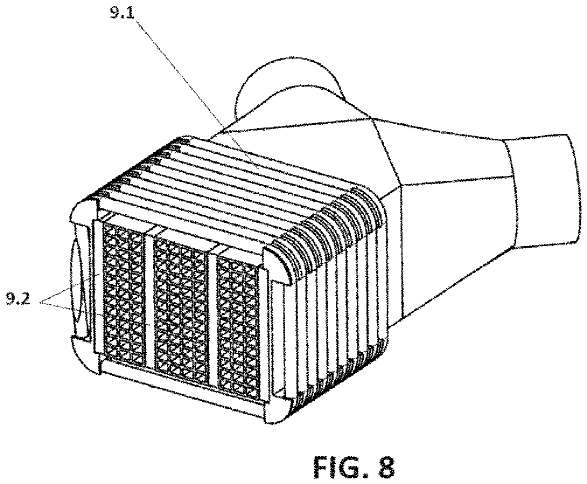

In an embodiment, shown in figures 6 to 9, the induction heating means is an induction coil (9.1) wound around the heat exchanger (8) and a plurality of ferromagnetic means (9.2) inserted in the heat exchanger (8). In particular, as shown in figures 7 and 8, the induction heating means is an induction coil (9.1) wound around the heat exchanger (8) and a plurality of ferromagnetic means (9.2) inserted in corresponding slots (9.3) provided in the heat exchanger (8).

Figure 7 depicts a horizontal cross-section view of the embodiment of figure 6 showing details of the plurality of ferromagnetic means (9.2) inserted in the corresponding slots (9.3) of the heat exchanger (8), along with the induction coil (9.1) wound around the heat exchanger (8).

Figure 8 depicts a perspective cross-section view of the heat exchanger (8) of figure 6 showing details of the plurality of ferromagnetic means (9.2) inserted in the corresponding slots (9.3) of the heat exchanger (8), along with the induction coil (9.1) wound around the heat exchanger (8).

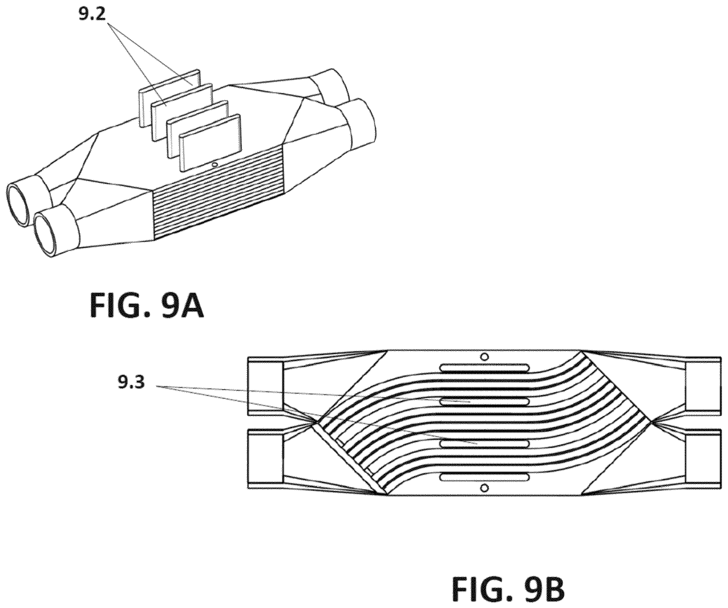

Figure 9A depicts a perspective view showing the plurality of ferromagnetic means (9.2) at the moment of their insertion in the corresponding slots (9.3 of the heat exchanger (8), and before the wound of the induction coil (9.1).

In an embodiment, the number of ferromagnetic means (9.2) and corresponding slots (9.3) in the heat exchanger (8) are 4. In a further embodiment, as shown in figure 9, the ferromagnetic means (9.2) are rectangular shaped plates.

Figure 9B depicts a horizontal cross-section view of the embodiment of figures 6 and 9A, showing the slots (9.3) of the heat exchanger (8).

The embodiment shown in figures 6 to 9 has the advantage of covering the body of the heat exchanger (8) by the induction coil (9.1) almost completely.

This embodiment is intended for situations wherein the material of the heat exchanger (8) is not ferromagnetically effective or compatible, in particular when the fuel is hydrogen since the compatible steel of the heat exchanger (8) is not ferromagnetic or has very poor inductive performance. Advantageously, the ferromagnetic means (9.2) allow induced current transmission to the body of heat exchanger (8). More specifically, the induction coils (9.1) generate induced currents on the ferromagnetic means (9.2), which in turn are heated by its ohmic resistance and this heat is transmitted to the non-ferromagnetic material of the heat exchanger (8) by thermal conduction.

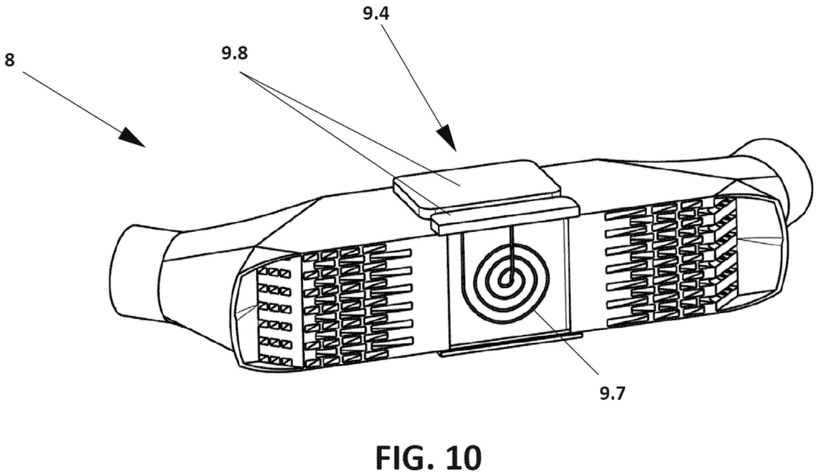

In a further embodiment, the induction heating means (9.1) are a plurality of induction cartridges (9.4) inserted within the heat exchanger (8) in corresponding slots (9.5) as shown in figures 10 to 12.

Each of the plurality of induction cartridges (9.4) comprises a ferromagnetic external casing (9.6) with an induction coil (9.7) housed inside said ferromagnetic external casing (9.6), and a lid (9.8) serving for handling the induction cartridge (9.4) and to be a stop for placing the induction cartridge (9.4) in the corresponding slot (9.5). Preferably there is a separating distance between the induction coil (9.7) itself and the ferromagnetic external casing (9.6), so that the inductions coil (9.7) is not in contact with the ferromagnetic external casing (9.6).

Figure 10 depicts a perspective cross-section view of the heat exchanger (8) showing the ferromagnetic external casing (9.6) also in cross-section, where the induction coil (9.7) is visible inside the ferromagnetic external casing (9.6).

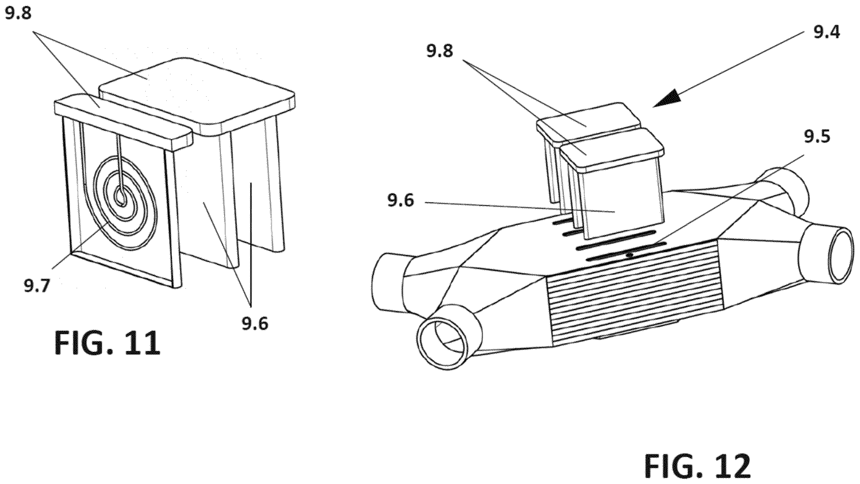

Figure 11 shows the same details of the induction cartridges (9.4) of figure 10.

Figure 12 depicts a perspective view showing the plurality of induction cartridges (9.2) at the moment of their insertion in the corresponding slots (9.5) of the heat exchanger (8).

In this embodiment, the number of induction cartridges (9.4) is two, each inductions cartridge (9.4) having in turn two ferromagnetic external casing (9.6) and one lid (9.8) for both ferromagnetic external casing (9.6).

Further, in a particular embodiment (not shown in the figures), the lid (9.8) contains the connectors that can electrically feed the induction coils (9.7).

In other embodiment there is only one lid (9.8) for all ferromagnetic external casing (9.6) used in the heat exchanger (8).

The advantage of this embodiment is its high modularity for component replacement and inspection, maintainability and repairability. In the event of any type of failure, it is sufficient to replace the damaged induction cartridges (9.4).

In a further embodiment, there is one lid (9.8) for each ferromagnetic external casing (9.6) used in the heat exchanger (8). Advantageously, this embodiment presents even a higher modularity for component replacement and inspection, maintainability and repairability. In the event of any type of failure of a particular induction cartridge (9.4), it is sufficient to replace the damaged one.

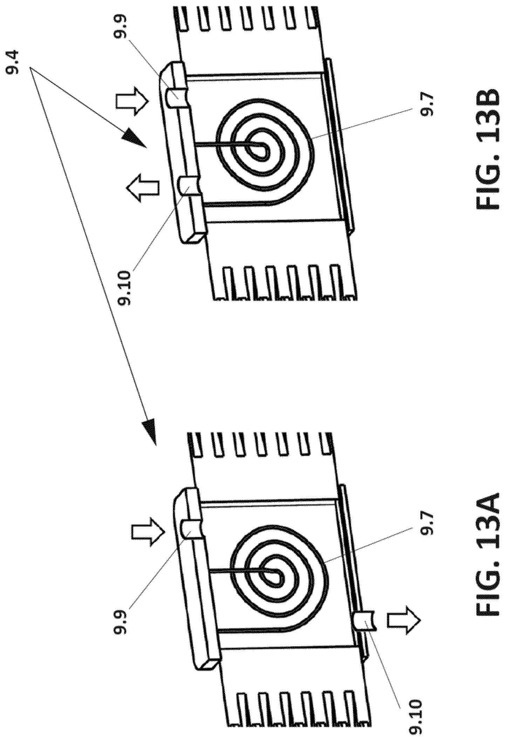

In another embodiment, as shown in figures 13A and 13B, each induction cartridge (9.4) comprises ventilation means to preserve the integrity of the induction coil (9.7) by creating air circulation between the induction coil (9.7) and the ferromagnetic external casing (9.6). This could be by natural or forced convection.

Preferably, each induction cartridge (9.4) comprises at least one air inlet (9.9) on one side and at least one air outlet (9.10) on the opposite side. Alternatively, both, the at least one air inlet (9.9) and the at least one air outlet (9.10) are on the same side of the induction cartridge (9.4).

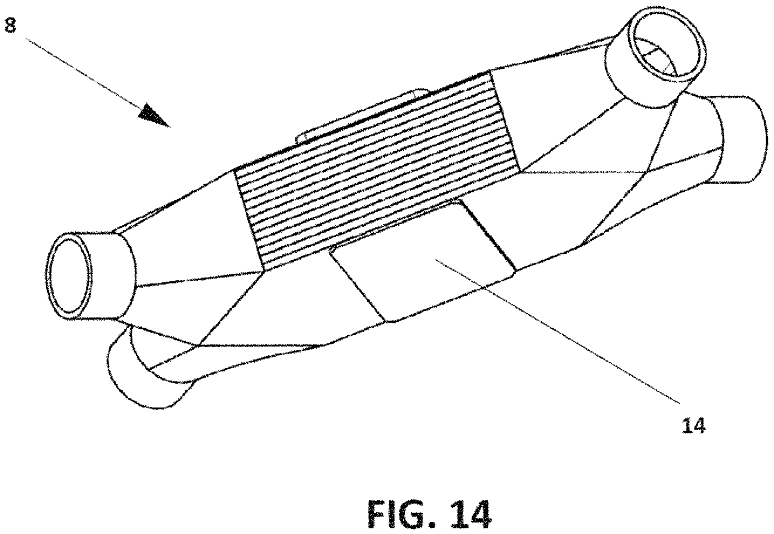

In a further embodiment, shown in figure 14, the heat exchanger (8) comprises a bottom cover (14) to close the side opposed to the side of inserting the inductions cartridges (9.4) in the slots (9.5). This bottom cover (14) allows that no heat is lost and avoids hot spots that could be a source of ignition.

In an embodiment compatible with any of the embodiments relating to the induction heating means (9.1) as heating means (9), the heat exchanger (8) further comprises isolation means, not shown in the figures, configured for confining heat into the heat exchanger (8).

### Resistance heating means (9.1) as heating means (9) of the heat exchanger (8)

In an embodiment, as shown in figure 5, the heating means (9) are a plurality of resistance heating means (9.2).

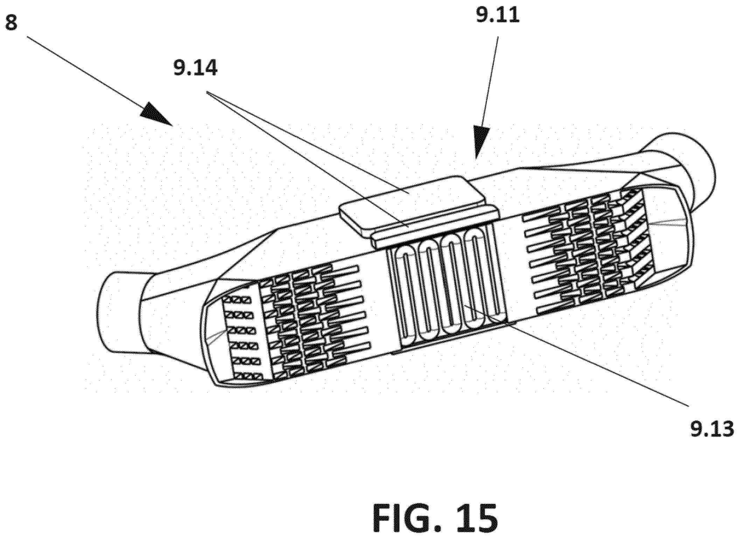

In an embodiment, the resistance heating means (9.2) are a plurality of resistance cartridges (9.11) inserted within the heat exchanger (8) in corresponding slots (9.12) as shown in figures 15 to 18.

Each of the plurality of resistance cartridges (9.11) comprises a resistance (9.13), and a lid (9.14) serving for handling the resistance cartridge (9.11) and to be a stop for placing the resistance cartridge (9.11) in the corresponding slot (9.12).

Further, in a particular embodiment (not shown in the figures), the lid (9.14) contains the connectors that can electrically feed the resistance (9.13).

Figure 15 depicts a perspective cross-section view of heat exchanger (8) showing the resistance cartridge (9.11) also in cross-section, where the resistance (9.13) is visible.

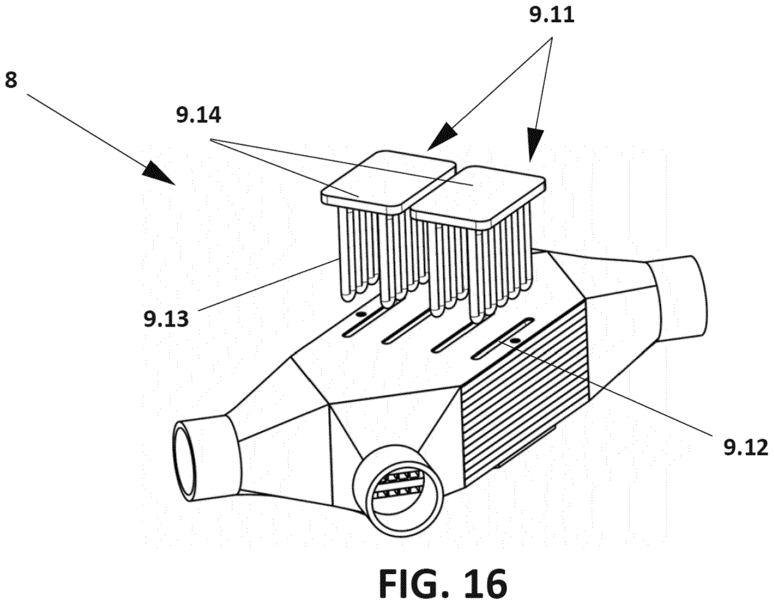

Figure 16 depicts a perspective view showing the plurality of resistance cartridges (9.11) at the moment of their insertion in the corresponding slots (9.12) of the heat exchanger (8).

In this embodiment, the number of resistance cartridges (9.11) is two, each resistance cartridge (9.11) having in turn two resistances (9.13) and one lid (9.14) for both resistances (9.13).

In other embodiment there is only one lid (9.14) for all resistances (9.13) used in the heat exchanger (8).

The advantage of this embodiment is its high modularity for component replacement and inspection, maintainability and repairability. In the event of any type of failure, it is sufficient to replace the damaged resistance cartridges (9.11).

In a further embodiment, there is one lid (9.8) for each resistance (9.13) used in the heat exchanger (8). Advantageously, this embodiment presents even a higher modularity for component replacement and inspection, maintainability and repairability. In the event of any type of failure of a particular resistance cartridge (9.11), it is sufficient to replace the damaged one.

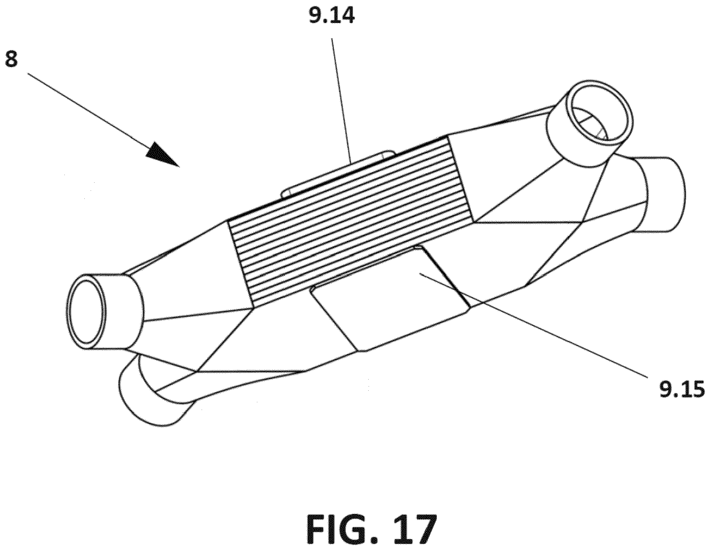

In a further embodiment, shown in figure 17, the heat exchanger (8) comprises a bottom cover (15) to close the side opposed to the side of inserting the resistance cartridges (9.11) in the slots (9.12). This bottom cover (14) allows that no heat is lost and avoids hot spots that could be a source of ignition

In an embodiment compatible with any of the embodiments relating to the resistance heating means (9.1) as heating means (9), the heat exchanger (8) further comprises isolation means, not shown in the figures, configured for confining heat into the heat exchanger (8).

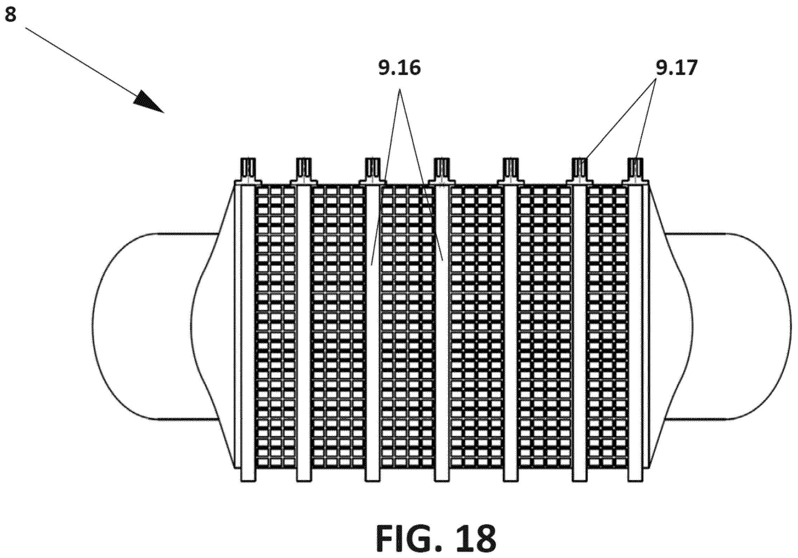

In an embodiment, shown in figures 18 to 22, the resistance heating means is a plurality of resistances (9.16) inserted in corresponding housings (9.18) provided in the heat exchanger (8).

Figure 18 depicts a horizontal cross-section view of the of the heat exchanger (8) showing details of the plurality of resistances (9.16) inserted in the corresponding housings (9.18) of the heat exchanger (8).

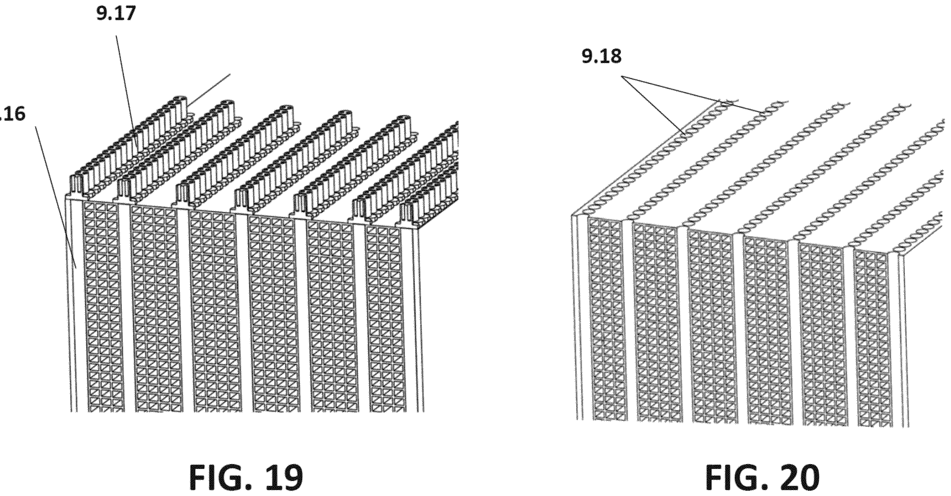

Figure 19 depicts a perspective cross-section view of the heat exchanger (8) of figure 18 showing details of the plurality of resistances (9.16) inserted in the corresponding housings (9.18) of the heat exchanger (8).

In an embodiment, the heat exchanger (8) comprises 7 rows of resistances (9.16).

Figure 20 depicts the same perspective cross-section view of the heat exchanger (8) of figure 19 without the resistances (9.16) and showing the plurality of housings (9.18) of the heat exchanger (8).

To facilitate the power supply, each of the resistors (9.16) comprises one or more electrical connection pins (9.17) that cooperates with corresponding electrical connectors (not shown in the figures). Preferably the electrical connectors are gastight. Thus, by simply removing the electrical connector there is direct access to electrical connection pins (9.17) of the resistances (9.16) to inspect or replace them individually.

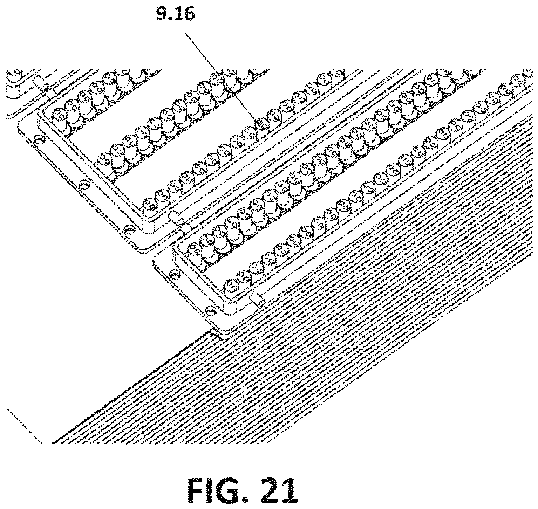

In a further embodiment, shown in figure 21, the heat exchanger (8) comprises an opening for a bottom cover to close the side opposed to the side of inserting the resistors (9.16) in the slots (9.18).

The opening gives accessibility to the end of the resistors (9.16) opposite the electrical connection pins (9.17), aiding their disassembly, allowing them to be pressed out in case they get stuck. Further, the bottom cover (14) for the opening allows that no heat is lost and avoids hot spots that could be a source of ignition.

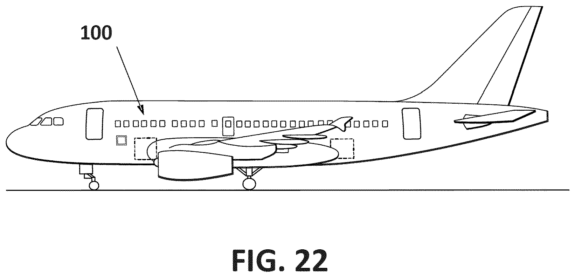

Figure 22 depicts an aircraft (100) comprising any embodiment of the heat transfer device (1) of the present invention.

### Method for conditioning fuel of an aircraft

The present invention further provides a method for conditioning fuel of an aircraft (100), the method comprising the following steps:
a) providing a heat transfer device (1) according to any embodiment of said heat transfer device (1) or a conditioning system according to any embodiment of said conditioning system,
b) providing heat from the heat source (6) or the heating means (9) to the heat exchanger (1)
c) providing heat from the heat exchanger (6) to the fuel of the fuel conduct (4),
d) monitoring the temperature of the fuel within the fuel conduct (4) at the second end (4.2) of the fluid conduct (4) by means of the temperature sensor (11), and
e) actuating the power supply (5) by means of the control and processing means (10) ), or actuating the heat source (6), or actuating both, the power supply (5) and the heat source (6), if the temperature of the fuel within the fuel conduct (4) is lower than a predetermined target temperature.

In an embodiment of the method of the present invention, the control and processing means (10) are configured for actuating the power supply (5) to provide heat to the fuel of the fuel conduct (4) within a range of 30 to 70 milliseconds, preferably in around 50 milliseconds.

## Claims

1. A heat transfer device (1) for an aircraft having a first inlet (2) and a first outlet (3), the heat transfer device (1) comprising:
- a fuel conduct (4) having a first end (4.1) and a second end (4.2), the first end (4.1) being connected in fluidic communication to the first inlet (2) of the heat transfer device (1) and the second end (4.2) being connected in fluidic communication to the first outlet (3) of the heat transfer device (1);
- a temperature sensor (11) located at the second end (4.2) of the fluid conduct (4) and configured for monitoring the temperature of the fuel within the fuel conduct (4); and
- a heat exchanger (8) for providing heat to the fuel of the fuel conduct (4),
wherein
- the heat exchanger (8) integrates,
∘ a heat source (6) comprising a working fluid, the heat source (6) being connected in fluidic communication to the heat exchanger (8) and being configured to provide heat to the heat exchanger (8); and
∘ heating means (9) connected to a power supply (5), the power supply (5) being configured for providing power to the heating means (9);
the heat exchanger (8) being configured for:
in a first operating mode, providing heat from the heat source (6) to the fuel of the fuel conduct (4),
in a second operating mode, providing heat from the heating means (9) to the fuel of the fuel conduct (4), and
in a third operating mode, providing heat from the heat source (6) and from the heating means (9), to the fuel of the fuel conduct (4);
and
the temperature sensor (11) is further connected to the power supply (5) and is further configured for actuating the power supply (5) by means of control and processing means (10) if the temperature of the fuel within the fuel conduct (4) is lower than a predetermined target temperature.

2. The heat transfer device (1) according to the preceding claim, wherein the heating means (9) are induction heating means (9.1).

3. The heat transfer device (1) according to claim 2, wherein
the induction heating means is an induction coil (9.1) wound around the heat exchanger(8) and
further comprises a plurality of ferromagnetic means (9.2) inserted in corresponding slots (9.3) provided in the heat exchanger (8).

4. The heat transfer device (1) according to claim 2, wherein the induction heating means (9.1) area plurality of induction cartridges (9.4) inserted within the heat exchanger (8) in corresponding slots (9.5).

5. The heat transfer device (1) according to claim 4, wherein each of the plurality of induction cartridges (9.4) comprises
a ferromagnetic external casing (9.6) with an induction coil (9.7) housed inside said ferromagnetic external casing (9.6), and
a lid (9.8) for handling the induction cartridge (9.4) and to be a stop for placing the induction cartridge (9.4) in the corresponding slot (9.5).

6. The heat transfer device (1) according to claim 1, wherein the heating means (9) are resistance heating means (9.2).

7. The heat transfer device (1) according to claim 6, wherein the resistance heating means is a plurality of resistance cartridges (9.11) inserted within the heat exchanger (8) in corresponding slots (9.12).

8. The heat transfer device (1) according to claim 7, wherein each of the plurality of resistance cartridges (9.11) comprises,
a resistance (9.13), and
a lid (9.14) for handling the resistance cartridge (9.11) and to be a stop for placing the resistance cartridge (9.11) in the corresponding slot (9.12).

9. The heat transfer device (1) according to any of the preceding claims, wherein the heat exchanger (8) further comprises isolation means configured for confining heat into the heat exchanger (8).

10. The heat transfer device (1) according to any of the preceding claims further comprising a second inlet (12) and a second outlet (13) wherein the second inlet (12) is configured for introducing an inert gas and the second outlet (13) is configured for conducting the inert gas to the outside of the heat transfer device (1) and to conduct together with the inert gas any leakage, such as fuel, that may occur.

11. The heat transfer device (1) according to claim 10, wherein the inert gas is enriched Nitrogen or enriched Helium.

12. The heat transfer device (1) according to any of the preceding claims, wherein,
- the heat exchanger (8) and the heating means (9) are encapsulated, or
- the heat exchanger (8), the heating means (9) and the heat source (6) are encapsulated, or
- the heat exchanger (8), the heating means (9) and the power supply (5) are encapsulated, or
- the heat exchanger (8), the heating means (9), the heat source (6) and the power supply (5) are encapsulated, or
- the heat exchanger (8), the heating means (9), the heat source (6), the control and processing means (10) and the power supply (5) are encapsulated.

13. The heat transfer device (1) according to any of the preceding claims, wherein the fluid of the fluid conduct (4) is hydrogen (H2).

14. A fuel conditioning system comprising a heat transfer device (1) according to any of the preceding claims.

15. Aircraft (100) comprising a heat transfer device (1) according to any of claims 1 to 10 or a fuel conditioning system according to any of claims 11 or 12.
